# EUROPEAN PATENT SPECIFICATION

(11) **EP 1 958 517 B1**
(45) Date of publication and mention of the grant of the patent: **21.08.2013**
(21) Application number: 08150962.2
(22) Date of filing: 01.02.2008
(51) Int. Cl.: A23G 3/20, A23G 3/28, B05B 1/00, B05C 5/02

(54) **Method and device for dispensing a liquid**
Verfahren und Vorrichtung zur Ausgabe von Flüssigkeit
Procédé et dispositif pour la distribution d'un liquide

(30) Priority: 02.02.2007 NL 2000466
(43) Date of publication of application: 20.08.2008
(73) Proprietor: De Grood, Johannes Petrus Wilhelmus, 6603 CX Alverna (NL); De Grood, Pascal Johannes, 6512 BR Nijmegen (NL)
(72) Inventor: De Grood, Johannes Petrus Wilhelmus, 6603 CX Alverna (NL); De Grood, Pascal Johannes, 6512 BR Nijmegen (NL); Tillie, Lucas Willem Mathieu, 5611 SG Eindhoven (NL)
(74) Representative: Brouwer, Hendrik Rogier

(56) References cited:
- WO-A-00/28215
- WO-A-2006/041222
- ES-A1- 2 191 528
- US-B1- 6 326 212

## Description

The present invention relates to a method and device for dispensing a liquid. The invention relates particularly to arranging on a substrate a material layer of a different material, wherein both materials are for instance formed by food products. Alternatively, the materials can also be formed by a decorative enamelling and tiles or the like. Adhesive can herein be applied for instance to specific adhesive surfaces in a manner such that products are for instance coated with polymer or varnish while leaving the edges clear (edge-free coated) so as to thus prevent fouling of a conveyor belt. More specific examples of this type of process are the arranging of a decorative filling or a surface decoration on cosmetics packages and the printing of pharmaceutical products.

In the production of food products it may in some circumstances be advantageous or desirable to arrange a second food product on a substrate formed by at least one first food product, this second food product being placed as a layer on the first food product. The second food product can for instance have a colour differing from that of the first food product in order to thus impart a decorative effect to the combination. Another possibility is that a desired effect, for instance a conserving effect, can be obtained by the different material properties. The second food product can be arranged in different forms, such as for instance in the form of an image, an icon, a text or a pattern, although a full or partial coating of the second food product is also possible. The first food product can herein be a substantially solid substance, such as chocolate, or a gelatinous substance such as a dessert or yoghurt, while the second food product consists, at least during dispensing, of a liquid or a liquid emulsion such as yoghurt, mayonnaise, sauce, oil and so forth.

Devices for applying a decoration to a food product are per se known. WO 01/93691 describes a device in which a number of nozzles are placed in an array for the purpose of applying a decoration in the form of a bitmap by means of spraying. The device has per nozzle a dispensing means which comprises a cylinder with a piston for dispensing a predetermined quantity of the liquid. It is further proposed to place the array at an oblique angle to a direction of movement of the first food product in order to thus increase the possible resolution of a decoration to be applied.

Such a device has various drawbacks. Due to its complex construction with narrow feed channels, cylinders and pistons, it is difficult to clean, which represents a problem because of the strict hygiene requirements in for instance the processing of food products. The described device further functions slowly as a result of the required alternating pattern of movement of the piston during dispensing of the liquid. In addition, there is a possibility of the liquid solidifying in the channels, whereby the device requires a high level of maintenance. This essential maintenance is increased still further here due to the great wear of the plunger and nozzle as a result of the moving parts.

An alternative for dispensing a liquid food product is known from ES 1 191 528, which describes a device for filling containers for liquid substances. This device however also has the drawback that dispensing of an accurate, very small quantity of liquid, in the order of magnitude of a droplet, is not possible herewith due to the large liquid storage capacity of the supply and discharge channel and the high resistance the channel provides to the liquid. Due to the force exerted thereon the membrane is further subject to great wear, which makes the embodiment susceptible to wear. Moreover, ES 1 191 528 does not disclose one device having a plurality of dispensing openings.

WO 2006/041222 describes a body-insertable apparatus, clearly not intended nor suitable for controlled dispensing of a liquid to a substrate. The apparatus comprises a balloon member, which is expandable by adding a medium via communication pipe. The balloon acts to generate a changing volume of a chamber in order to generate a liquid flow out of the apparatus of into the apparatus. However, the dispensing opening in the apparatus is continuously uncovered, so the liquid in the chamber cannot be placed under pressure.

US 6 326 212 describes an apparatus a fluid dispensing apparatus, for dispensing a fluid via a plurality of dispensing openings. The problem of the non-use of certain openings at the periphery is solved, because of vacuum problems occurring with the membrane. Individual control of the openings is mentioned nowhere, nor are means visible to move specific parts of the membrane.

It is therefore an object of the present invention to provide a device for dispensing a liquid, such as a food product, which obviates at least one of the above stated drawbacks, or provides a usable alternative.

The invention provides for this purpose a device for dispensing a liquid or liquid substance such as for instance a suspension, an emulsion or a dispersed material according to claim 1 and a method dispensing a liquid through a plurality of dispensing openings according to claim 18. The device comprises a container for the liquid such as yoghurt, mayonnaise, sauce, oil, etc., onto which connect a plurality of dispensing openings for dispensing the liquid to a substrate in controlled and targeted manner. The device further comprises at least one membrane which connects onto the dispensing openings and which is displaceable between a first sealing position, in which the dispensing openings are covered by the membrane, and a second opened position in which the dispensing openings are left clear by the membrane. The device is also provided with a medium-filled control system which connects to the membrane such that the membrane is displaceable between the first and the second position by means of pressure variation on the medium. Owing to the absence of (voluminous) mechanical drive means the mass inertia of the device is minimal during displacing of the membrane, whereby it can be displaced at great speed between the first sealing position and the second opened position. The liquid can thus be dispensed with great precision and at high speed. The medium-filled control system can consist as desired of a hydraulic or pneumatic system.

The container can be provided with the liquid in per se known manner, for instance via at least one supply opening therefor. The container can be further provided with means such as heating means for making or keeping liquid the food product which is dispensed, as well as with a device for blending or mixing the liquid in the reservoir in order to keep it liquid. The dispensing openings can each adjoin a nozzle incorporated in a wall of the container, or be provided with a channel extending at least partly into the container.

A wall of the container in which the dispensing openings are incorporated preferably extends connecting to the dispensing opening over more than 50%, and in an ideal case 100%, of the opening in the plane of the opening so as to thus create the most limited resistance possible during liquid passage. It is most advantageous here if the dispensing openings connect over their full periphery to the liquid container. A connection over a substantial part of the periphery to the liquid container has the additional advantage that the supply of the liquid can take place relatively quickly. Viscous liquid can thus for instance also be supplied relatively quickly.

Obstructing the supply of the liquid to the closing valve or the discharge channel as little as possible creates the possibility of accurate dosing. The liquid is preferably not carried through a narrow feed pipe or any other obstruction which impedes a free throughflow.

In a further embodiment of the device according to the present invention a wall of the container is provided with dispensing openings and the device is provided with individual parallel liquid channels connecting the liquid container to the dispensing openings. The number of channels is here for instance equal to the number of dispensing openings, one channel can lead the liquid to a plurality of dispensing openings or, conversely, a plurality of channels can lead the liquid to one dispensing opening. The dispensing openings are isolated from each other by arranging the channels, thereby reducing unevenness in the dispensing of the liquid from a determined dispensing opening as a result of interference between this dispensing opening and adjacent or nearby dispensing openings.

The outer ends of at least one channel, and preferably the ends of all channels, can herein debouch in the reservoir, wherein the device is adapted to circulate the liquid via the at least one channel when the membrane seals the at least one dispensing opening to which the channel carries liquid.

The channels preferably extend with at least one directional component perpendicularly of the direction in which the dispensing openings are adjacently located. In order to provide a good throughfeed the channels have a length of 10 to 60 mm, a width of 1 to 10 mm and a height of 0.5 to 2 mm.

Irrespective of the presence of the channels, the wall of the container in which the dispensing openings are incorporated can extend connecting to the dispensing opening over more than 50% in order to guarantee a low-resistance supply channel for the liquid.

In an embodiment of the present invention the dispensing openings adjoin a nozzle mounted in a wall of the container, a dispensing opening of which nozzle is provided with an acute angle so that no (droplet of) liquid for dispensing can remain on the nozzle under the influence of adhesive force.

During operation the membrane is displaced at a speed such that the liquid leaves the dispensing opening at a determined starting speed. This starting speed lies between 1 and 20 m/s, and preferably between 5 and 10 m/s. The device hereby presses (or fires) the liquid in the direction of the base to be provided with liquid. The starting speed at which the liquid is pressed out of the device can be controlled by varying the pressure and the flow rate of the medium with which the membrane is displaced. The speed of membrane displacement is selected to match the substrate to be provided with liquid. In the case of a gelatinous substrate a lower speed will generally be selected than in the case of a solid substrate in order to prevent the liquid droplets penetrating the substrate for decorating.

The liquid is preferably urged out of the dispensing openings in droplets of 0.2 µl to 0.1 ml. An advantageous membrane displacement has a frequency between 1 and 500 Hz, in particular 100 Hz to 500 Hz, and preferably around 100 Hz. In order to ensure a good sealing the medium pressure exerted on the membrane in a closed position of the dispensing opening is here at least 0.2 bar higher than the pressure of the liquid in the liquid container which has to be dispensed. The device is preferably dimensioned here to dispense a liquid with a viscosity above 15 centipoise. For this purpose the dispensing openings have a cross-section between 0.25 and 5 mm.

In an embodiment of the present invention the membrane forms a wall of the container or adjoins a wall of the reservoir on the inner side thereof. The container can for instance comprise a lower wall in which at least one nozzle with a discharge channel for the liquid is arranged, this discharge channel extending in the reservoir as far as the membrane. In a first position the membrane herein rests or clamps on the discharge channel. In a second position the membrane is separated from the discharge channel in that it is stretched into a space which adjoins the container on the upper side, wherein the upper wall of the container comprises in the vicinity of the discharge channel an opening for stretching of the membrane therethrough.

Adjacently of the opening can be situated a chamber for applying a pressure therein which can be an overpressure or an underpressure such as a vacuum. This pressure can for instance be generated by an electrical actuator. Dispensing of the liquid takes place substantially under the influence of the movement of the membrane, wherein the membrane ejects a measured quantity of liquid from the device.

In order to apply a desired decoration more quickly, an assembly of devices according to the present invention can be used, thus forming a decorating device with a plurality of dispensing openings. Dispensing openings for the liquid substance of respective devices of the assembly can herein be disposed in a matrix form. In an embodiment such a matrix can comprise a single row of dispensing openings. In order to decorate the substrate at high speed the matrix can be provided with a number of dispensing openings such that a two-dimensional decoration can be applied in one operation. The matrix can here comprise for instance 8 to 32 or even to for instance 64 rows. In addition, it is possible to apply a plurality of columns, for instance 8. In this manner an image can be applied to a food product in one spraying operation with a multiple spraying treatment via a selection of the various dispensing openings. It will be apparent that the number of rows and columns does not have to be equal but can be modified to a desired format of the decoration. The mutual distance between the delivery points and the size of the openings thereof can also be modified to the desired format of the decoration and the viscosity of the liquid for dispensing.

In order to simplify the construction a plurality of closures can be formed by a shared membrane.

In an embodiment in which the substrate is moved relative to the device during decorating, for instance by a throughput device for carrying a substrate through the dispensing device in a first direction, delivery points located in a first column and delivery points located in a second column can be offset relative to each other such that delivery points of the first and second columns do not lie in line in a throughfeed direction of the substrate through the device. A decoration with a relatively high resolution can hereby be formed without the dispensing openings having to be disposed particularly close to each other.

The invention will now be elucidated on the basis of the following figures, in which:
- Figure 1a shows a cross-section of a device for decorating a substrate with a liquid according to the present invention, with a membrane in a first position for sealing a dispensing opening;
- Figure 1b shows a cross-section of a device for decorating a substrate with a liquid according to the present invention, with a closure in a second position for leaving clear a dispensing opening;
- Figure 2a shows an exploded view of an assembly of devices according to the present invention;
- Figure 2b forms an assembly of devices according to the present invention;
- Figure 3a shows a perspective top view of an exploded embodiment of the device according to the present invention;
- Figure 3b shows a detail of figure 3a;
- Figure 3c shows a perspective bottom view of an exploded embodiment of the device according to the present invention;
- Figure 3d shows a detail of figure 3c.

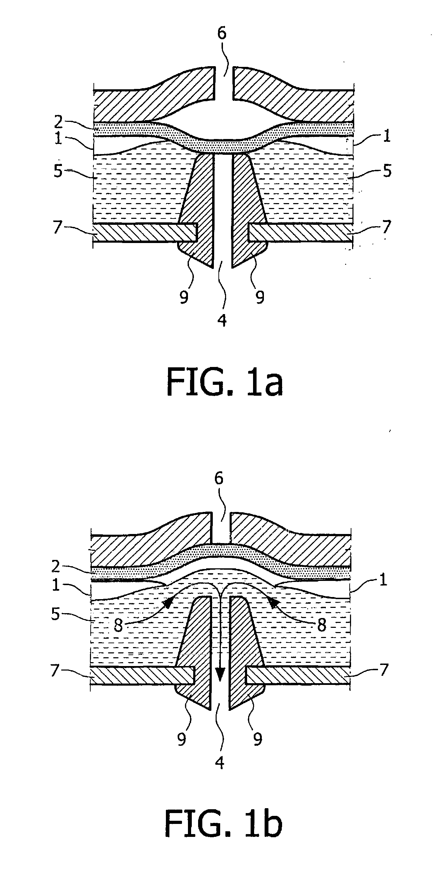

Figure 1a shows a cross-section of a device according to the present invention. The figure shows upper wall 1 and a lower wall 7 of a container for containing a liquid 5. A discharge channel 4 for liquid 5 extends through lower wall 7. Discharge channel 4 is sealed by a closure formed by a membrane 2. Membrane 2 is pressed into a first position thereof by means of air pressure in chamber 6, in which position it seals channel 4 so that the liquid 5 cannot leave the reservoir. Channel 4 is formed in a spray nozzle 9 arranged in lower wall 7.

Figure 1b shows a cross-section of a device according to the present invention of figure 1a, wherein membrane 2 is in a second position thereof. The figure again shows upper wall 1 and a lower wall 7 of a container for containing a liquid 5. Discharge channel 4 is now however left clear by the closure formed by membrane 2. Membrane 2 is pulled into a second position thereof by means of a low air pressure, or even a vacuum, in chamber 6, in which position it leaves channel 4 clear so that liquid 5 can leave the reservoir. Liquid 5 can now enter channel 4 from a first direction 8 and a second direction 8. The device is preferably, at least locally around dispensing channel 4, substantially line-symmetrical relative to dispensing channel 4 and, when membrane 2 leaves discharge channel 4 clear, liquid 5 can reach the discharge channel from all sides in simple manner and without obstacles or narrow passages.

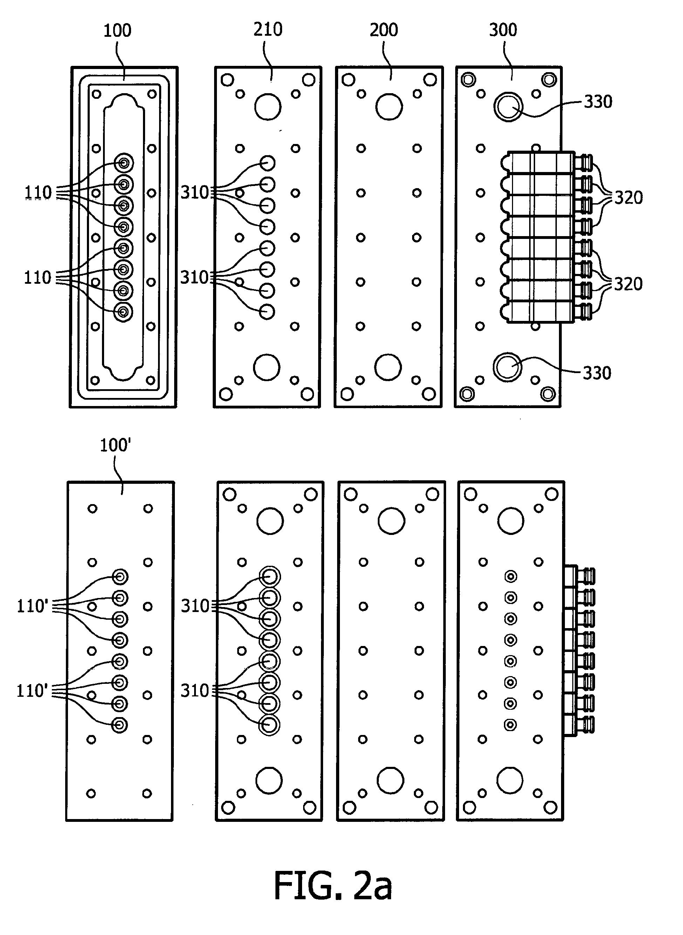

Figure 2a shows an exploded view of an assembly of devices according to the present invention. The figure shows a top view 100 of a lower wall of the assembly, in which nozzles 110 are accommodated. The nozzles extend some distance from the lower wall. The figure also shows a bottom view 100' of bottom plate 110 in which dispensing openings 110' of nozzles 100 are visible.

The figure further shows a membrane 200 which is placed resting on the ends of nozzles 110 on the upper side of the bottom plate, so that the discharge channels extending in nozzles 110 are sealed by the membrane in a rest position thereof. Also shown is a cover plate 210 which comprises openings 310, this cover plate being positioned on the membrane such that openings 310 are situated precisely above the outer ends of nozzles 110 covered by membrane 200, so that the membrane can extend in the openings in order to leave clear the outer ends of nozzles 110. A top view of cover plate 300 provided with pneumatic valves 320 is also shown, wherein feeds 330 for liquid are also shown.

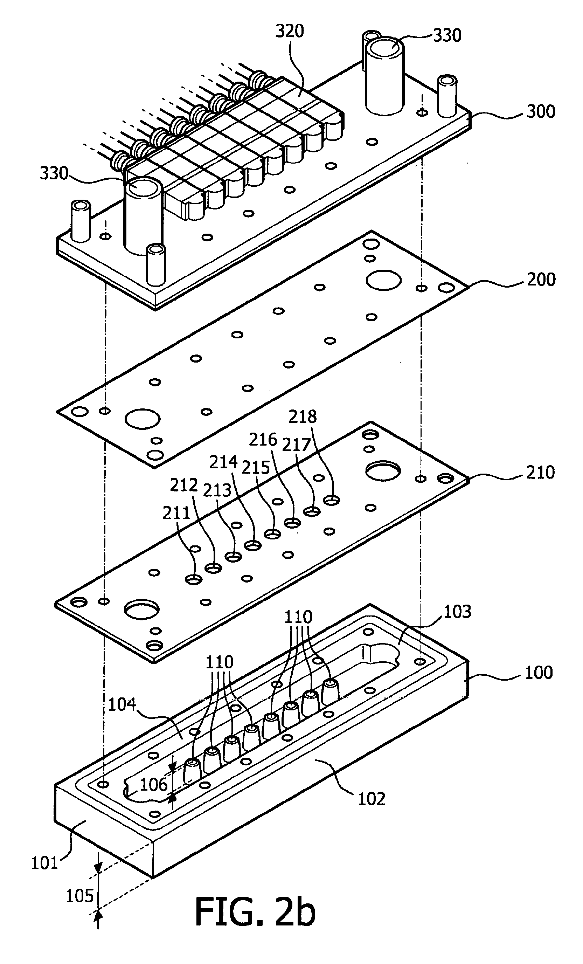

Figure 2b shows a perspective view of the components of figure 2a, wherein the device is partly exploded. Also shown are a first side wall 101, a second side wall 102, a third side wall 103 and a fourth side wall 104 of the lower wall 100 in which nozzles 110 are accommodated. The walls each have a height 105 substantially corresponding to the height 106 of the part of the discharge channel formed in nozzles 110 and extending in the reservoir, so that the top side of the nozzles corresponds to the top side of the wall plus the thickness of cover plate 210. Membrane 200 hereby seals the discharge channels in the assembled situation of the device. Valve frame 300 is adapted such that, in the assembled situation thereof, an opening 310 (not shown) with a pneumatic valve 320 placed thereabove is situated above each nozzle 110 for the purpose of moving membrane 200 away from a nozzle 110 in order to leave clear a dispensing channel formed by a nozzle 110. The membrane is held in place by cover plate 210, in which openings 211-218 are arranged, whereby membrane 200 lies precisely on nozzles 110 in the assembled situation.

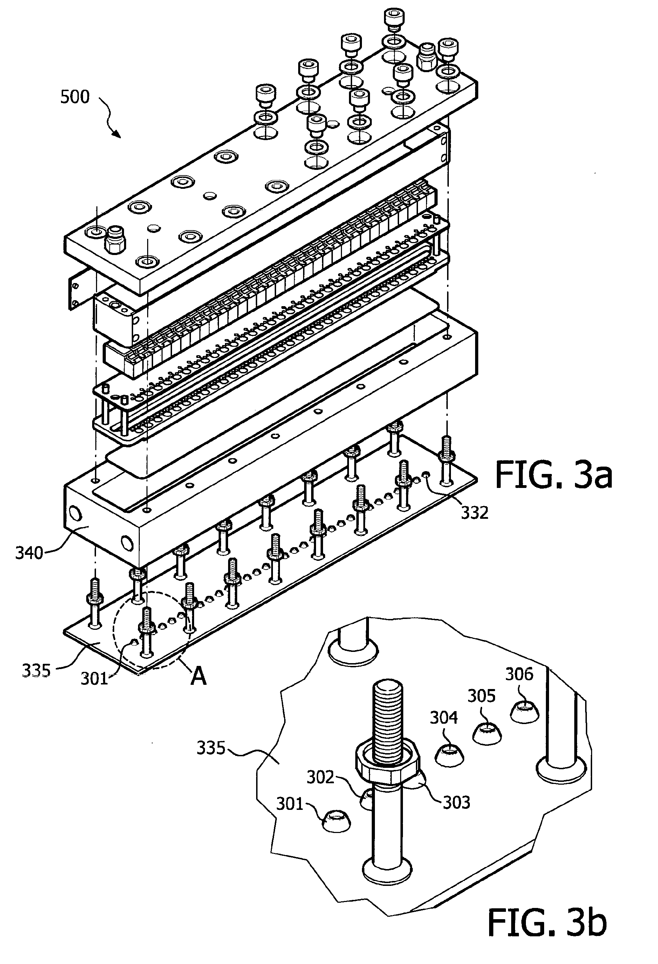

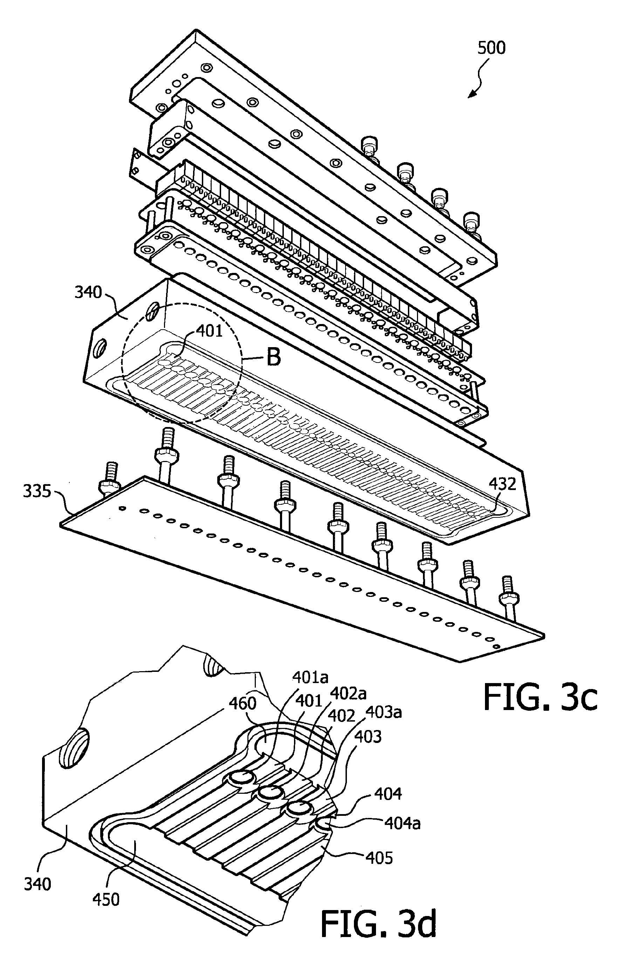

Figure 3a shows a perspective top view of an exploded embodiment 300 of the device according to the present invention, wherein the dispensing openings in the form of nozzles 301-332 are incorporated in a wall 335 of the container and wherein a number of substantially parallel channels (shown in figure 3C) corresponding to the number of dispensing openings is provided in a container part 340 adjacently of the wall for the purpose of carrying the liquid from the liquid container to one of the dispensing openings 301 per channel.

Figure 3b shows a detail view of the part of wall 335 designated with A in figure 3a, in which nozzles 301-306 are clearly visible.

Figure 3c shows a perspective bottom view of an exploded embodiment 500 of the device of figure 3a. Arranged in container part 340 are channels 401-432, in which recesses 401a-432a are left clear for receiving therein the mouths of nozzles 301-332 as shown in figure 3a. The liquid is supplied to nozzles 301-332 through respective channels 401-432. A uniform distribution of the liquid over pressure distribution channels 440 and 450 is thus achieved.

Figure 3d shows a detail view of the part of container part 340 designated with B in figure 3c, in which the channels 401-405 and the recesses for nozzle mouths 401a-404a are clearly shown, as are pressure distribution channels 450 and 460.

The device can be embodied such that the liquid is circulated from pressure distribution channel 440 to pressure distribution channel 450, or vice versa, by a pump present for this purpose, or that pressure distribution channel 450 and pressure distribution channel 460 are both adapted to supply liquid.

In addition to the described and shown embodiments, various other embodiments are also possible, such as embodiments with a plurality of mutually connected containers, which can for instance comprise different liquids during use for the purpose of applying a decoration with multiple colours. The device can further be provided with a supply device for the substrate for decorating. The pneumatic valves or other means for moving the membrane can be provided with an automated control and can for instance be electrically controllable. The device can also be provided with means for applying a pressure inside the reservoir for dispensing the liquid under the influence thereof. In order to accelerate dispensing of the liquid the pressure in the reservoir is herein preferably a minimum of 0.25 bar higher than the pressure outside the device. The dispensing of the liquid then takes place when the pressure exerted on the membrane by the control system becomes lower than the pressure of the liquid in the reservoir. The liquid then urges the membrane into the opened position.

When channels are arranged for carrying the liquid to the nozzles, one or more nozzles can be arranged per channel and the device can be embodied such that the liquid can circulate from reservoir part 440 to liquid container part 450 through channels of nozzles which are sealed by the membrane.

## Claims

1. Device (100) for dispensing a liquid, comprising:
- a liquid container;
- a plurality of dispensing openings (4) connecting to the liquid container for controlled dispensing of the liquid to a substrate;
- at least one membrane (2) which connects onto the dispensing openings (4) and which is displaceable between:
- a first sealing position, in which the dispensing openings (4) are covered by the membrane (2);
- a second opened position in which the dispensing openings (4) are left clear by the membrane (2) ; and
- a medium-filled control system which connects to the membrane (2) such that the membrane (2) is displaceable between the first and the second position by means of pressure variation on the medium,
- means for placing the liquid in the liquid container under pressure in order to dispense liquid when the dispensing openings (4) are left clear by the membrane (2).
**characterized in that**
- the position of the at least one membrane connecting to the dispensing openings is independently controllable per opening by control means.

2. Device as claimed in claim 1, **characterized in that** the means for placing the liquid in the liquid container under pressure are adapted to generate an overpressure which is a minimum of 0.25 bar higher relative to the ambient pressure.

3. Device as claimed in claim 1 or 2, **characterized in that** the medium-filled control system is adapted to:
- generate a pressure higher than the pressure of the liquid in the liquid container in a situation where the membrane is placed in the sealing position, and
- generate a pressure lower than the pressure of the liquid in the liquid container in a situation where the membrane is in the opened position.

4. Device as claimed in claims 1-3, **characterized in that** the medium-filled control system is a hydraulic control system.

5. Device as claimed in claims 1-4, **characterized in that** the medium-filled control system is a pneumatic control system.

6. Device as claimed in any of the foregoing claims, **characterized in that** a wall of the container in which the dispensing openings are incorporated preferably extends connecting to the dispensing opening over more than 50%, and in an ideal case 100%, of the opening in the plane of the dispensing opening so as to thus create the most limited resistance possible during liquid passage.

7. Device as claimed in any of the foregoing claims, **characterized in that** a wall of the container is provided with dispensing openings, and that the device is provided with separate liquid channels connecting the liquid container to the dispensing openings.

8. Device as claimed in claim 7, **characterized in that** the opposite outer ends of at least one channel both debouch in the reservoir, wherein the device is adapted to circulate the liquid via the at least one channel in the situation where the membrane seals the at least one dispensing opening to which the channel connects.

9. Device as claimed in any of the foregoing claims, **characterized in that** the membrane forms part of the wall of the liquid container.

10. Device as claimed in any of the foregoing claims, **characterized in that** the liquid container is provided with a member displaceable in the liquid for causing circulation of the liquid in the liquid container.

11. Device as claimed in any of the foregoing claims, **characterized in that** the liquid container is provided with heating means for holding the liquid at a determined temperature.

12. Device as claimed in any of the foregoing claims, **characterized in that** the dispensing openings are located in a matrix form.

13. Device as claimed in claim 12, **characterized in that** the dispensing openings are located in at least a 3 x 3 matrix.

14. Device as claimed in any of the foregoing claims, **characterized in that** the device comprises at least two mutually connecting liquid containers.

15. Device as claimed in any of the foregoing claims, **characterized in that** the device comprises a plurality of individual membranes connecting to the dispensing openings.

16. Device as claimed in any of the foregoing claims, **characterized in that** the device is adapted to dispense a liquid with a viscosity above 15 centipoise.

17. Device as claimed in any of the foregoing claims, **characterized in that** at least one dispensing opening has a cross-section between 0.25 and 5 mm.

18. Method for dispensing a liquid through a plurality of dispensing openings with a device according to claim 1, comprising the processing steps of:
A) introducing a liquid for dispensing into a liquid container;
B) applying a pressure to the liquid which is higher than the ambient pressure;
C) carrying the liquid to the dispensing openings;
D) opening and closing the openings in controlled manner per dispensing opening by means of displacing the membrane,
**characterized in that** the membrane is displaced by means of varying a medium pressure.

19. Method as claimed in claim 18, **characterized in that** the membrane is displaced at a speed such that the liquid is pressed out of the dispensing opening at a speed of at least 0.5 m/s.

20. Method as claimed in claim 18 or 19, **characterized in that** the liquid is urged out of the dispensing openings in droplets, wherein the droplets have a volume of 0.2 µl to 0.1 ml.

21. Method as claimed in any of the claims 18-20, **characterized in that** the membrane is displaced at a frequency of 1 to 500 Hz.

22. Method as claimed in any of the claims 18-21, **characterized in that** the medium pressure exerted on the membrane in a closed position of the dispensing opening is at least 0.2 bar higher than the pressure of the liquid.

## Patentansprüche

1. Einrichtung (100) zur Abgabe einer Flüssigkeit, die Folgendes umfasst:
- einen Flüssigkeitsbehälter;
- eine Mehrzahl an Abgabeöffnungen (4), die am Flüssigkeitsbehälter angebracht sind, um Flüssigkeit kontrolliert an ein Substrat abzugeben;
- mindestens eine Membran (2), die an den Abgabeöffnungen (4) angebracht ist und zwischen folgenden Positionen bewegt werden kann:
- einer ersten Dichtposition, in der die Abgabeöffnungen (4) von der Membran (2) bedeckt werden;
- einer zweiten geöffneten Position, in der die Abgabeöffnungen (4) von der Membran (2) nicht bedeckt werden; und
- einem Regelsystem, das mit einem Medium gefüllt und mit der Membran (2) so verbunden ist, dass die Membran (2) durch Druckschwankungen, die auf das Medium wirken, zwischen der ersten und der zweiten Position hin und her bewegt wird,
- einem Mittel, um die Flüssigkeit im Flüssigkeitsbehälter unter Druck zu setzen, damit Flüssigkeit abgegeben werden kann, wenn die Abgabeöffnungen (4) von der Membran (2) nicht bedeckt werden;
**dadurch gekennzeichnet, dass**
- die Position der mindestens einen Membran, die an den Abgabeöffnungen angebracht ist, durch Öffnen mit dem Regelmittel unabhängig regelbar ist.

2. Einrichtung nach Anspruch 1, **dadurch gekennzeichnet, dass** das Mittel, um die Flüssigkeit im Flüssigkeitsbehälter unter Druck zu setzen, so angepasst ist, dass es einen Überdruck erzeugt, der in Bezug auf den Umgebungsdruck mindestens 0,25 bar beträgt.

3. Einrichtung nach Anspruch 1 oder 2, **dadurch gekennzeichnet, dass** das mit einem Medium gefüllte Regelsystem folgendermaßen angepasst ist:
- zur Erzeugung eines Drucks, der höher ist als der Druck der Flüssigkeit im Flüssigkeitsbehälter, wenn sich die Membran in der geschlossenen Dichtposition befindet, und
- zur Erzeugung eines Drucks, der niedriger ist als der Druck der Flüssigkeit im Flüssigkeitsbehälter, wenn sich die Membran in der geöffneten Position befindet.

4. Einrichtung nach den Ansprüchen 1 bis 3, **dadurch gekennzeichnet, dass** das mit einem Medium gefüllte Regelsystem ein hydraulisches Regelsystem ist.

5. Einrichtung nach den Ansprüchen 1 bis 4, **dadurch gekennzeichnet, dass** das mit einem Medium gefüllte Regelsystem ein pneumatisches Regelsystem ist.

6. Einrichtung nach jedem der vorherigen Ansprüche, **dadurch gekennzeichnet, dass** eine Wand des Behälters, in dem die Abgabeöffnungen enthalten sind, mit jeder Abgabeöffnung verbunden ist und sich vorzugsweise über mehr als 50 %, und im Idealfall 100 %, über die Öffnung in der Ebene der Abgabeöffnung erstreckt, so dass beim Durchlauf der Flüssigkeit der geringstmögliche Widerstand entsteht.

7. Einrichtung nach jedem der vorherigen Ansprüche, **dadurch gekennzeichnet, dass** eine Wand des Behälters mit Abgabeöffnungen versehen ist und dass die Einrichtung mit separaten Flüssigkeitskanälen, die den Flüssigkeitsbehälter mit den Abgabeöffnungen verbinden, versehen ist.

8. Einrichtung nach Anspruch 7, **dadurch gekennzeichnet, dass** die beiden entgegengesetzten äußeren Enden mindestens eines Kanals in den Behälter münden, wobei die Einrichtung so angepasst ist, dass die Flüssigkeit über den mindestens einen Kanal zirkuliert, wenn die Membran die mindestens eine der Abgabeöffnungen, mit der der Kanal verbunden ist, abdichtet.

9. Einrichtung nach jedem der vorherigen Ansprüche, **dadurch gekennzeichnet, dass** die Membran einen Bestandteil der Wand des Flüssigkeitsbehälters bildet.

10. Einrichtung nach jedem der vorherigen Ansprüche, **dadurch gekennzeichnet, dass** der Flüssigkeitsbehälter mit einem Glied ausgestattet ist, das sich innerhalb der Flüssigkeit bewegen lässt, um so eine Zirkulation der Flüssigkeit im Flüssigkeitsbehälter zu erreichen.

11. Einrichtung nach jedem der vorherigen Ansprüche, **dadurch gekennzeichnet, dass** der Flüssigkeitsbehälter mit einem Heizmittel ausgestattet ist, mit dem die Flüssigkeit auf einer bestimmten Temperatur gehalten werden kann.

12. Einrichtung nach jedem der vorherigen Ansprüche, **dadurch gekennzeichnet, dass** sich die Abgabeöffnungen in einer Matrixform befinden.

13. Einrichtung nach Anspruch 12, **dadurch gekennzeichnet, dass** sich die Abgabeöffnungen in mindestens einer 3x3-Matrix befinden.

14. Einrichtung nach jedem der vorherigen Ansprüche, **dadurch gekennzeichnet, dass** die Einrichtung mindestens zwei miteinander verbundene Flüssigkeitsbehälter umfasst.

15. Einrichtung nach jedem der vorherigen Ansprüche, **dadurch gekennzeichnet, dass** die Einrichtung eine Vielzahl einzelner Membrane umfasst, die mit den Abgabeöffnungen verbunden sind.

16. Einrichtung nach jedem der vorherigen Ansprüche, **dadurch gekennzeichnet, dass** die Einrichtung so angepasst ist, dass sie eine Flüssigkeit mit einer Viskosität von mehr als 15 Centipoise abgibt.

17. Einrichtung nach jedem der vorherigen Ansprüche, **dadurch gekennzeichnet, dass** mindestens eine Abgabeöffnung einen Querschnitt zwischen 0,25 mm und 5 mm aufweist.

18. Verfahren zur Abgabe einer Flüssigkeit durch eine Vielzahl an Abgabeöffnungen mit einer Einrichtung nach Anspruch 1, das folgende Verarbeitungsschritte umfasst:
A) Einfüllen einer Flüssigkeit, die in einen Flüssigkeitsbehälter abgegeben wird;
B) Ausüben eines Drucks, der größer ist als der Umgebungsdruck, auf die Flüssigkeit;
C) Befördern der Flüssigkeit zu den Abgabeöffnungen;
D) Öffnen und Schließen der Öffnungen pro Abgabezyklus auf geregelte Weise durch Bewegen der Membran;
dadurch charakterisiert, dass die Membran durch Variieren eines Drucks in einem Medium bewegt wird.

19. Verfahren nach Anspruch 18, **dadurch gekennzeichnet, dass** die Membran so schnell bewegt wird, dass die Flüssigkeit mit einer Geschwindigkeit von mindestens 0,5 m/s aus der Abgabeöffnung gedrückt wird.

20. Verfahren nach Anspruch 18 oder 19, **dadurch gekennzeichnet, dass** die Flüssigkeit in Tropfen aus den Abgabeöffnungen gedrückt wird, wobei die Tropfen ein Volumen von 0,2 µl bis 0,1 ml aufweisen.

21. Verfahren nach jedem der Ansprüche 18-20, **dadurch gekennzeichnet, dass** die Membran mit einer Frequenz von 1 bis 500 Hz bewegt wird.

22. Verfahren nach jedem der Ansprüche 18-21, **dadurch gekennzeichnet, dass** der Druck des Mediums, der in einer geschlossenen Position der Abgabeöffnung auf die Membran ausgeübt wird, um mindestens 0,2 bar höher ist als der Flüssigkeitsdruck.

## Revendications

1. Dispositif (100) pour distribuer un liquide, comprenant :
- un réservoir de liquide ;
- une pluralité d'orifices de distribution (4) raccordés au réservoir de liquide en vue de la distribution régulée du liquide à un substrat ;
- au moins une membrane (2) qui s'articule sur les orifices de distribution (4) et qui est déplaçable entre :
- une première position d'obturation dans laquelle les orifices de distribution (4) sont recouverts par la membrane (2), et
- une seconde position ouverte dans laquelle les orifices de distribution (4) sont laissés libres par la membrane ;
- un système de commande rempli d'un fluide qui est raccordé à la membrane (2) de telle sorte que la membrane (2) est déplaçable entre la première position et la seconde au moyen d'une variation de pression sur le fluide ;
- des moyens pour mettre sous pression le liquide dans le réservoir de liquide afin de distribuer du liquide lorsque les orifices de distribution (4) sont laissés libres par la membrane (2),
**caractérisé en ce que** :
- la position de la membrane ou au moins d'une membrane articulée sur les orifices de distribution peut être commandée indépendamment, par orifice, par des moyens de commande.

2. Dispositif selon la revendication 1, **caractérisé en ce que** les moyens de mise sous pression du liquide dans le réservoir de liquide sont adaptés pour produire une surpression qui est au minimum 0,25 bar plus élevée par rapport à la pression ambiante.

3. Dispositif selon la revendication 1 ou 2, **caractérisé en ce que** le système de commande rempli d'un fluide est adapté :
- pour produire une pression supérieure à la pression du liquide dans le réservoir de liquide dans une situation où la membrane est placée dans la position d'obturation, et
- pour produire une pression inférieure à la pression du liquide dans le réservoir de liquide dans une situation où la membrane est placée dans la position ouverte.

4. Dispositif selon les revendications 1-3, **caractérisé en ce que** le système de commande rempli d'un fluide est un système de commande hydraulique.

5. Dispositif selon les revendications 1-4, **caractérisé en ce que** le système de commande rempli d'un fluide est un système de commande pneumatique.

6. Dispositif selon l'une quelconque des revendications précédentes, **caractérisé en ce qu'**une paroi du réservoir dans laquelle les orifices de distribution sont intégrés, s'étend de préférence en se raccordant à l'orifice de distribution sur plus de 50 % et, dans un cas idéal, sur 100 %, de l'orifice dans le plan de l'orifice de distribution de sorte à créer la résistance la plus limitée possible pendant le passage du liquide.

7. Dispositif selon l'une quelconque des revendications précédentes, **caractérisé en ce qu'**une paroi du réservoir est pourvue d'orifices de distribution et **en ce que** le dispositif est pourvu de canaux à liquide séparés raccordant le réservoir de liquide aux orifices de distribution.

8. Dispositif selon la revendication 7, **caractérisé en ce que** les extrémités extérieures opposées d'au moins un canal débouchent toutes les deux dans le réservoir, le dispositif étant adapté pour faire circuler le liquide dans le canal ou au moins un canal dans la situation où la membrane obture l'orifice ou au moins un orifice de distribution auquel le canal se raccorde.

9. Dispositif selon l'une quelconque des revendications précédentes, **caractérisé en ce que** la membrane fait partie de la paroi du réservoir de liquide.

10. Dispositif selon l'une quelconque des revendications précédentes, **caractérisé en ce que** le réservoir de liquide est pourvu d'un organe déplaçable dans le liquide pour faire circuler le liquide dans le réservoir de liquide.

11. Dispositif selon l'une quelconque des revendications précédentes, **caractérisé en ce que** le réservoir de liquide est pourvu de moyens de chauffage pour garder le liquide à une température déterminée.

12. Dispositif selon l'une quelconque des revendications précédentes, **caractérisé en ce que** les orifices de distribution sont agencés sous la forme d'une matrice.

13. Dispositif selon la revendication 12, **caractérisé en ce que** les orifices de distribution sont agencés en au moins une matrice 3 x 3.

14. Dispositif selon l'une quelconque des revendications précédentes, **caractérisé en ce que** le dispositif comprend au moins deux réservoirs de liquide raccordés l'un à l'autre.

15. Dispositif selon l'une quelconque des revendications précédentes, **caractérisé en ce que** le dispositif comprend une pluralité de membranes individuelles articulées sur les orifices de distribution.

16. Dispositif selon l'une quelconque des revendications précédentes, **caractérisé en ce que** le dispositif est adapté pour distribuer un liquide de viscosité supérieure à 15 centipoises.

17. Dispositif selon l'une quelconque des revendications précédentes, **caractérisé en ce qu'**au moins un orifice de distribution a une section droite comprise entre 0,25 et 5 mm.

18. Procédé de distribution d'un liquide par une pluralité d'orifices de distribution avec un dispositif selon la revendication 1, comprenant les étapes de traitement consistant :
A) à introduire dans un réservoir à liquide un liquide à distribuer ;
B) à appliquer au liquide une pression qui est supérieure à la pression ambiante ;
C) à amener le liquide aux orifices de distribution ;
D) à ouvrir et fermer les orifices d'une manière régulée par orifice de distribution au moyen du déplacement de la membrane,
**caractérisé en ce que** la membrane est déplacée en faisant varier la pression d'un fluide.

19. Procédé selon la revendication 18, **caractérisé en ce que** la membrane est déplacée à une vitesse telle que le liquide est expulsé de l'orifice de distribution à une vitesse d'au moins 0,5 m/s.

20. Procédé selon la revendication 18 ou 19, **caractérisé en ce que** le liquide est expulsé des orifices de distribution en gouttelettes, les gouttelettes ayant un volume de 0,2 µl à 0,1 ml.

21. Procédé selon l'une quelconque des revendications 18-20, **caractérisé en ce que** la membrane est déplacée à une fréquence de 1 à 500 Hz.

22. Procédé selon l'une quelconque des revendications 18-21, **caractérisé en ce que** la pression exercée par le fluide sur la membrane dans une position fermée de l'orifice de distribution est au moins 0,2 bar plus élevée que la pression du liquide.
